# EUROPEAN PATENT SPECIFICATION

(11) **EP 0 792 109 B1**
(45) Date of publication and mention of the grant of the patent: **29.07.1998**
(21) Application number: 95938590.7
(22) Date of filing: 22.11.1995
(51) Int. Cl.: A23L 1/16

(54) **ALIMENTARY PASTA COMPRISING INDIAN CORN FLOUR**
Teigware enthaltend Indian - Maismehl
PATES ALIMENTAIRES COMPORTANT DE LA FARINE DE MAIS

(30) Priority: 24.11.1994 IT UD940190
(43) Date of publication of application: 03.09.1997
(73) Proprietor: MOLINO DI FERRO S.R.L., 31050 Fanzolo di Vedelago (IT)
(72) Inventor: MARCONATO, Luigi, I-31050 Fanzolo di Vedelago (IT)
(74) Representative: D'Agostini, Giovanni, Dr.
(86) International application number: IT9500197
(87) International publication number: WO9615683

(56) References cited:
- DATABASE WPI Section Ch, Week 8637 Derwent Publications Ltd., London, GB; Class D11, AN 86-243523 XP002000006 & JP,A,56 051 962 (MAMA MACARONI KK) , 9 May 1981 & PATENT ABSTRACTS OF JAPAN vol. 005, no. 114 (C-064), 23 July 1981
- PATENT ABSTRACTS OF JAPAN vol. 017, no. 278 (C-1065), 28 May 1993 & JP,A,05 015331 (NISSIN FOOD PROD CO LTD), 26 January 1993,

## Description

### Technical Field

This invention refers to alimentary pasta in the form of spaghetti, noodles, bucatini, orecchiette, penne and/or pennette, and any other convenient shape, as usually available on the market, to be cooked.

### Background Art

In prior art pre-cooked alimentary pasta is well known and is marketed in alternative to raw alimentary pasta always dried and packaged in normal packaging in either plastic or cardboard.

The technique of the pre-cooking consists however in firstly making the raw pasta with a flour dough of raw wheat and water and then market it like this, after drying, always in the raw state, or pre-cook it and subsequently dry it for marketing in the pre-cooked state (this second solution is only found in pasta sheets for lasagne and the like).

The marketing at the pre-cooked state however is therefore very limited both as the flavour is not appreciated, and because it maintains the taste of "overcooked" pasta (pasta scotta).

For this reason the substantial diffusion and consumption of raw pasta remains, however this has the drawback of the cooking time.

The type of alimentary pasta which this invention refers to is the pasta ready in the form, already dried, like spaghetti, bucatini, orecchiette, noodles, penne and pennette, etc. destine to the more or less quick cooking time, with the immission into boiling water.

It is known from prior art that the traditional type of alimentary pasta is made with the flour dough of tender and/or hard grain or a mixture of these, with water.

Other eventual additives like salt, eggs, etc., do not modify the substantial basic preparation which is flour at its raw state and water.

The drawback of this type of pasta derives also from the fact that it has substantially only one flavour, that is that of the wheat flour.

Alternating flavours cannot be obtained, because the use of other flour as for example that of Indian corn does not have the necessary gluten conglomeration and would require for this reason either dough with wheat flour or dough with other agglutination and/or sticky products, such as starch.

One of these solutions is disclosed in DATABASE WPI Section Ch, Week 8637, Derwent Publications Ltd. London GB; Class D11, AN 86-243523 XP002000006 & GP,A, 56051962 (MAMA MACARONI KK), 9 May 1981; abstract & Patent Abstracts of Japan vol.005, no. 114 (C-064) 23 July 1981), which disclose a "Macaroni manufacture mix yellow Indian corn powder with alpha-starch of 20-50% with raw powder of macaroni so that the corn powder content is 5-40%. In conversion of starch, hot water may be used".

For this reason pasta factories have always continued to produce wheat pasta even if varying it with the addition of colours and different flavours for example the green pasta (with for example spinach extract), the yellow (E.g.. with egg yolks), the red, the black, etc.

Other known variations are for example the pasta of other types of wheat like rye, barley and also wholemeal, however they all bring us to the basic component, wheat flour.

There remains consequently, according to the purpose of the present invention, the necessity to find alternative pasta possibilities which please the palate, and therefore the consumer, that maintain the concept of "pasta al dente" (not over-cooked) but with much shorter cooking times, which can only be given from pre-cooked pasta, but without the aspect and the flavour of "pasta scotta" (over-cooked pasta) but always with the flavour of "pasta al dente".

The aim of this invention is to avoid to the above-mentioned drawbacks making possible the realisation of an alimentary pasta with a new and very appreciated and well tested flavour.

This and other aims are reached as claimed by means of the realisation of a pasta of the type conformed in the various shapes of the common alimentary pasta of wheat, but substantially characterised by being realised with Indian corn flour (maize-meal) only, rather than that of wheat or mixture of one with the other and furthermore characterised by the fact that the Indian corn flour (maize-meal) used for the dough is pre-cooked.

In this way all the above-mentioned drawbacks are avoided, for the fact that while the raw flour of Indian corn (maize-meal) does not have an agglutinating effect, that is, if kneaded with water is not able to form a sticky dough such to be able to be formed or shaped before drying therefore needing other products like wheat flour or other agglutination products (e.g. alpha-starch of cited prior art Japanese solution), on the contrary cooked or pre-cooked Indian corn flour (maize-meal) fully realises such agglutinating effect, therefore it mixes perfectly with the water like the raw wheat flour.

In other words, the desired dough effect is obtained in exactly the opposite way to the present technique of preparing pasta (use of raw wheat flour or alpha-starch) with the use of Indian corn flour (maize-meal) without other starchy material, not at the raw state but at the cooked or pre-cooked state.
The process for making it is therefore:
- cook the raw Indian corn flour (maize-meal) or use pre-cooked Indian corn flour;
- prepare a mixture of it with water and forming or shaping drawing or rolling) the mixture in the desired shapes (spaghetti, noodles, orecchiette, penne, etc.)
- dry the shaped product obtained;
- pack the dry product for marketing.

The product obtained will be an alimentary pasta with the typical flavour of "polenta" but with the shape and the characteristics of wheat pasta in a completely new flavour, alimentaryly healthy and inviting and always "al dente".

Further advantage is that a pasta of this pre-cooked type needs an extremely short amount of time to cook (less than half) if compared to the time required for cooking the traditional raw pasta cooking of a wheat flour base and notwithstanding always maintaining the pleasant flavour of the "al dente" pasta because of the unusual characteristics of dried Indian corn flour (maize-meal), even in the pre-cooked state.

Therefore with this solution in a simple way and surprisingly untaught until now, all the desired scopes are obtained, fully avoiding the problems of complaint and with a maize-meal (Indian corn powder) of easy reach, cheap and of largest diffusion for its appreciated consumption.

## Claims

1. Alimentary pasta in the form of spaghetti, noodles, bucatini, orecchiette, penne and/or pennette, and any other convenient shape, characterised by the fact that:
- it is made with Indian Corn flour (maize-meal) only and contains Indian Corn flour (maize-meal) only;
- the Indian Corn flour (maize-meal) used in it, is in the cooked or pre-cooked state before the respective shaping of dough so that the alimentary pasta is at the same time without other starchy material adding and in a pre-cooked state.

2. A process of making alimentary pasta manufactured in the dry state in shape as defined as spaghetti, bucatini, noodles, orecchiette, penne and/or pennette, and any other drawn, rolled or formed shape, by means of dough with at least water, according to claim 1, characterised in that:
• Indian corn flour (maize-meal) and water only is used;
• said Indian corn flour (maize-meal) is in the cooked or pre-cooked state before mixing with water and shaping;
• after the shaping in the defined form it is dried for respective marketing like pasta pre-cooked.

## Patentansprüche

1. Nahrhafte Teigwaren in Form von Spaghetti, Tagliatelle, Bucatini, Orecchiette, Penne und/oder Pennette und jeglicher anderen geeigneten Form, gekennzeichnet dadurch daß:
- sie nur aus Maismehl hergestellt sind und ausschließlich Maismehl enthalten;
- sich das in ihnen verwendete Maismehl vor der betreffenden Formgebung des Teiges im gekochten oder vorgekochten Zustand befindet, so daß die nahrhaften Teigwaren zur gleichen Zeit keinen Zusatz eines anderen stärkehaltigen Materials aufweisen und sich im vorgekochten Zustand befinden.

2. Prozeß zur Herstellung von nahrhaften Teigwaren, die im trockenen Zustand, mittels eines Teiges mit mindestens Wasser, in einer Form hergestellt werden, die als Spaghetti, Bucatini, Tagliatelle, Orecchiette, Penne und/oder Pennette definiert ist oder in jeglicher gezogenen, gerollten oder gebildeten Form nach Anspruch 1, gekennzeichnet dadurch, daß:
• nur Maismehl und Wasser verwendet wird;
• sich besagtes Maismehl vor dem Mischen mit Wasser und der Formgebung im gekochten oder vorgekochten Zustand befindet;
• sie nach Formgebung in der definierten Form zum betreffenden Marketing als vorgekochte Teigwaren getrocknet werden.

## Revendications

1. Pâtes alimentaires en forme de spaghetti, nouilles, bucatini, orecchiette, pennette et/ou penne, et toutes autres formes acceptables, caractérisées en ce que:
- ces pâtes sont exclusivement fabriquées avec de la farine de maïs et ne contiennent que de la farine de maïs;
- la farine de maïs utilisée pour la fabrication des pâtes, est cuite ou précuite avant le modelage respectif de la pâte afin que les pâtes alimentaires soient en même temps sans autres additifs farineux et précuites.

2. Un procédé de fabrication des pâtes alimentaires dans l'état sec dans la forme aussi défini que spaghetti, bucatini, nouilles, orecchiette, pennette et/ou penne, et toutes autres formes, roulées ou formées, avec de la pâte et de l'eau, selon la revendication 1, caractérisé en ce que:
• la farine de maïs et l'eau sont seulement utilisées;
• dite farine de mais est cuite ou précuite avant d'être mélangée avec de l' eau et modelée;
• après le modelage dans la forme définie la pâte est séchée pour pouvoir être commercialisée en tant que pâtes précuites.
